# EUROPEAN PATENT APPLICATION

(11) **EP 4 734 299 A1**
(43) Date of publication of application: **29.04.2026**
(21) Application number: 25306730.0
(22) Date of filing: 17.10.2025
(51) Int. Cl.: H01R 31/00

(54) **DC SOCKET**

(30) Priority: 22.10.2024 CN 202411481985
(71) Applicant: SCHNEIDER ELECTRIC INDUSTRIES SAS, 92500 Rueil-Malmaison (FR)
(72) Inventor: XIONG, Kun, Shenzhen, 518000 (CN); LI, Huayu, Shenzhen, 518000 (CN); FU, Jie, Shenzhen, 518000 (CN)
(74) Representative: Manitz Finsterwald Patent- und Rechtsanwaltspartnerschaft mbB

(57) **Abstract**

A DC socket includes: first and second socket contacts respectively electrically coupled to a positive and a negative electrodes of a power supply; a trigger circuit generating a first trigger signal upon a plug being inserted to a first predetermined position; an on-off control unit connecting to the trigger circuit and including a first line and a second line respectively connected between the first socket contact and the positive electrode, where the first line is provided with a semiconductor switching element, the second line is provided with a relay, and the on-off control unit controls the semiconductor switching element to be switched on upon receiving the first trigger signal; a voltage detection unit connected between the first line and the on-off control unit, where the on-off control unit controls the relay to be switched on upon voltage of the first line being equal to a power supply voltage.

## Description

### FIELD

Embodiments of the present disclosure relate to the field of electrical equipment, and more particularly to a DC socket.

### BACKGROUND

In a power supply system, sockets can be divided into DC (direct current) sockets and AC (alternating current) sockets. Compared with alternating current, a breaking arc generated by direct current is larger, and the difficulty of arc extinguishing for direct current is higher. In addition, an AC arc generated during breaking or closing of an AC socket and an AC plug can be extinguished at a zero-crossing point. However, the voltage of DC power supply does not have a zero-crossing point, therefore, during the process of a DC socket being plugged and unplugged, a DC arc generated by DC power supply is not as easy to be extinguished as the AC arc that is extinguished at the zero-crossing point, thereby bringing a potential safety hazard. Therefore, how to improve the arc extinguishing capability of the DC socket becomes a noteworthy issue.

### SUMMARY

It is an object of the present disclosure to provide a DC socket to at least partially solve the above problems.

In a first aspect of the present disclosure, there is provided a DC socket, including: a first socket contact and a second socket contact, where the first socket contact is electrically coupled to a positive electrode of a power supply, and the second socket contact is electrically coupled to a negative electrode of the power supply; a trigger circuit adapted to generate a first trigger signal upon a plug being inserted to a first predetermined position relative to the first socket contact and the second socket contact; an on-off control unit connected to the trigger circuit and including a first line and a second line, where the first line is connected between the first socket contact and the positive electrode of the power supply, and the second line is connected between the first socket contact and the positive electrode of the power supply, the first line is provided with a semiconductor switching element, the second line is provided with a relay, and the on-off control unit is adapted to control the semiconductor switching element to be switched on upon receiving the first trigger signal; and a voltage detection unit connected between the first line and the on-off control unit to detect a voltage of the first line, where the on-off control unit is adapted to control the relay to be switched on upon the voltage of the first line being equal to a power supply voltage of the power supply.

In embodiments according to the present disclosure, the trigger circuit is used to generate the first trigger signal upon the plug being inserted to the first predetermined position relative to the first socket contact and the second socket contact of the socket, so that the on-off control unit controls the semiconductor switching element to be switched on; and the voltage detection unit is used to detect the voltage of the first line, so that the on-off control unit controls the relay to be switched on upon the voltage of the first line being equal to the power supply voltage of the power supply, which ensures that no electric arc is generated during the process of the relay being switched on, thereby reducing potential safety hazards.

In some embodiments, the on-off control unit includes: a control circuit electrically coupled to the power supply, where a first input end of the control circuit is connected to the trigger circuit, a second input end of the control circuit is connected to an output end of the voltage detection unit, a first output end of the control circuit is connected to a control end of the semiconductor switching element, a second output end of the control circuit is connected to a control end of the relay, the control circuit is adapted to control the semiconductor switching element to be switched on upon receiving the first trigger signal, and the control circuit is adapted to control the relay to be switched on upon the voltage of the first line being equal to the power supply voltage of the power supply.

In some embodiments, the control circuit includes a first delay circuit adapted to control the semiconductor switching element to be switched off after the relay is switched on for a first predetermined time delay.

In some embodiments, the trigger circuit is adapted to generate a second trigger signal upon the plug being pulled out to a second predetermined position relative to the first socket contact and the second socket contact, the control circuit is adapted to control the semiconductor switching element to be switched on and the relay to be switched off upon receiving the second trigger signal, and the control circuit further includes a second delay circuit adapted to control the semiconductor switching element to be switched off after the relay is switched off for a second predetermined time delay.

In some embodiments, the DC socket further includes a current-limiting resistor connected in series with the semiconductor switching element.

In some embodiments, the current-limiting resistor is a negative temperature coefficient thermistor.

In some embodiments, the DC socket further includes a voltage conversion unit, a first input end and a second input end of the voltage conversion unit are respectively connected to the positive electrode and the negative electrode of the power supply, a first output end of the voltage conversion unit is connected to the control circuit to convert the power supply voltage of the power supply into a first voltage and deliver the first voltage to the control circuit, and a second output end of the voltage conversion unit is connected to the relay to convert the power supply voltage of the power supply into a second voltage and deliver the second voltage to the relay.

In some embodiments, the DC socket further includes a diode, an anode of the diode is connected to the power supply, and a cathode of the diode is connected to the first input end of the voltage conversion unit.

In some embodiments, the semiconductor switching element is a MOS transistor.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:

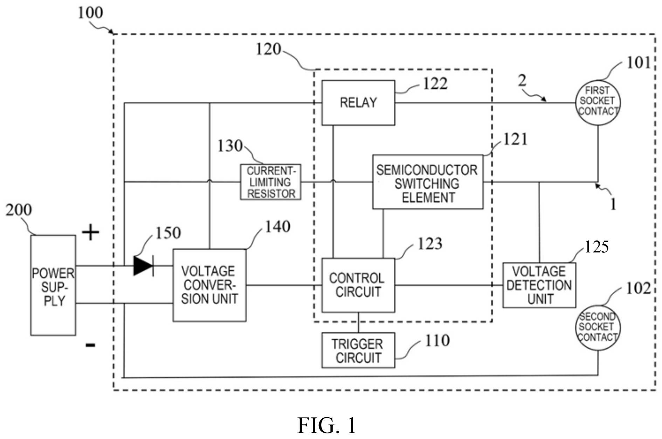

FIG. 1 shows a circuit block diagram of a DC socket according to an embodiment of the present disclosure.

### DETAILED DESCRIPTION

Embodiments of the present disclosure will be described in more detail below with reference to the accompanying drawings. While embodiments of the present disclosure are shown in the drawings, it should be understood that the present disclosure may be implemented in various forms and should not be limited by embodiments set forth herein. Rather, these embodiments are provided to make this disclosure more thorough and complete, and to fully convey the scope of the present disclosure to those skilled in the art.

As used herein, the term "including" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, compared with alternating current, the breaking arc generated by direct current is larger, and the difficulty of arc extinguishing for direct current is higher. In addition, the AC arc generated during breaking or closing of the AC socket and the AC plug can be extinguished at the zero-crossing point. However, the voltage of DC power supply does not have the zero-crossing point, therefore, during the process of the DC socket being plugged and unplugged, the DC arc generated by DC power supply is not as easy to be extinguished as the AC arc that is extinguished at the zero-crossing point, thereby bringing a potential safety hazard. Embodiments of the present disclosure provide a DC socket, where a trigger circuit is used to generate a first trigger signal upon a plug being inserted to a first predetermined position relative to a first socket contact and a second socket contact of a socket, so that an on-off control unit controls a semiconductor switching element to be switched on; and a voltage detection unit is used to detect a voltage of a first line, so that the on-off control unit controls a relay to be switched on upon the voltage of the first line being equal to a power supply voltage of the power supply, which ensures that no electric arc is generated during the process of the relay being switched on, thereby reducing potential safety hazards. Hereinafter, the principles of the present disclosure will be described with reference to FIG. 1.

FIG. 1 shows a circuit block diagram of a DC socket 100 according to an embodiment of the present disclosure. As shown in FIG. 1, the DC socket 100 generally includes a first socket contact 101, a second socket contact 102, a trigger circuit 110, an on-off control unit 120, and a voltage detection unit 125. The first socket contact 101 is electrically coupled to a positive electrode of a power supply 200, and the second socket contact 102 is electrically coupled to a negative electrode of the power supply 200.

The trigger circuit 110 can generate a first trigger signal upon a plug being inserted to a first predetermined position relative to the first socket contact 101 and the second socket contact 102. The on-off control unit 120 is connected to the trigger circuit 110 and includes a first line 1 and a second line 2. The first line 1 is connected between the first socket contact 101 and the positive electrode of the power supply 200, and the second line 2 is connected between the first socket contact 101 and the positive electrode of the power supply 200. The first line 1 is provided with a semiconductor switching element 121. The second line 2 is provided with a relay 122.

In some embodiments, the trigger circuit 110 may use a contact switch. The contact switch may be disposed at the first predetermined position inside the DC socket 100. Upon the plug being inserted through jacks to the first predetermined position, the plug can abut against and apply pressure to contacts of the contact switch to generate the first trigger signal. In some embodiments, the first predetermined position may be, for example, a position where a tip of the plug is located when the plug is inserted into the DC socket 100 to one-third of its length. It should be understood that the setting of the first predetermined position may be determined according to actual working requirements, which is not limited in the present disclosure.

With continued reference to FIG. 1, the on-off control unit 120 can control the semiconductor switching element 121 to be switched on upon receiving the first trigger signal. In some embodiments, the semiconductor switching element 121 may be, for example, a MOS transistor. By switching on the semiconductor switching element 121, a soft start of the DC socket 100 can be achieved, that is, the voltage on the first line 1 is slowly raised from zero to be equal to the power supply voltage, so as to reduce the impact of inrush current on the DC socket 100. In other embodiments, the semiconductor switching element 121 may be, for example, an insulated gate bipolar transistor (IGBT). It should be understood that, based on the teaching provided by the present disclosure, other types of semiconductor switching elements that can be conceived by those of ordinary skill in the art to implement the aforementioned functions, all such implementations fall within the scope of the present disclosure.

In some embodiments, the on-off control unit 120 can control the relay 122 to be switched on upon the voltage of the first line 1 being equal to the power supply voltage of the power supply 200. For example, when the voltage detection unit 125 detects that the voltage of the first line 1 is raised to the power supply voltage, the voltage detection unit 125 may generate a driving signal, so that the on-off control unit 120 controls the relay 122 to be switched on upon receiving the driving signal. Since there is a parallel connection relationship between the first line 1 and the second line 2, when the voltage of the first line 1 is raised to be equal to the power supply voltage, the magnitude of the electromotive force on the second line 2 will also be equal to the power supply voltage. In this way, when the relay 122 is controlled to be switched on, the potential difference across two ends of the relay 122 is zero, thereby achieving the purpose of no arc generation.

In some embodiments, the on-off control unit 120 includes a control circuit 123. The control circuit 123 is electrically coupled to the power supply 200. The control circuit 123 has a first input end connected to the trigger circuit 110, a second input end connected to an output end of the voltage detection unit 125, a first output end connected to a control end of the semiconductor switching element 121, and a second output end connected to a control end of the relay 122. The control circuit 123 can control the semiconductor switching element 121 to be switched on upon receiving the first trigger signal, and the control circuit 123 can control the relay 122 to be switched on upon the voltage of the first line 1 being equal to the supply voltage of the power supply 200. In some embodiments, the control circuit 123 may be a single-chip microcomputer. It should be understood that, based on the teaching provided by the present disclosure, other types of control circuits that can be conceived by those of ordinary skill in the art to implement the aforementioned functions, all such implementations fall within the scope of the present disclosure.

In some embodiments, the control circuit 123 includes a first delay circuit. The first delay circuit can control the semiconductor switching element 121 to be switched off after the relay122 is switched on for a first predetermined time delay, so as to avoid excessive loss caused by the semiconductor switching element 121 being switched on for a long time.

In some embodiments, upon the plug being pulled out to a second predetermined position relative to the first socket contact 101 and the second socket contact 102, the trigger circuit 110 can generate a second trigger signal. The control circuit 123 can control the semiconductor switching element 121 to be switched on and the relay 122 to be switched off upon receiving the second trigger signal. Taking the case where the trigger circuit 110 uses a contact switch as an example, when the plug is pulled out to the second predetermined position, the plug stops applying pressure to the contacts of the contact switch to generate the second trigger signal. The second predetermined position may be, for example, the position where the tip of the plug is located when the plug is pulled out by two-thirds of its length. It should be understood that the setting of the second predetermined position may be determined according to actual working requirements, which is not limited in the present disclosure.

In some embodiments, the control circuit 123 may further include a second delay circuit. The second delay circuit can control the semiconductor switching element 121 to be switched off after the relay 122 is switched off for a second predetermined time delay. In some embodiments, a duration of the second predetermined time may depend on the type and parameters of the relay 122.

In some embodiments, the DC socket 100 may further include a current-limiting resistor 130. The current-limiting resistor 130 is connected in series with the semiconductor switching element 121, so as to reduce the inrush current during startup in the case where the DC socket 100 is connected to a capacitive load. In some embodiments, the current-limiting resistor 130 may be a negative temperature coefficient thermistor (NTC). The NTC thermistor has a relatively large resistance at normal temperature, when the semiconductor switching element 121 on the first line 1 is switched on, the NTC thermistor can reduce the inrush current to protect the semiconductor switching element 121. When the semiconductor switching element 121 enters a normal operating state after being switched on, the resistance of the NTC thermistor will decrease rapidly to reduce power loss. It should be understood that, based on the teaching provided by the present disclosure, other types of current-limiting resistors that can be conceived by those of ordinary skill in the art to implement the aforementioned functions, all such implementations fall within the scope of the present disclosure.

In some embodiments, the DC socket 100 may further include a voltage conversion unit 140. A first input end and a second input end of the voltage conversion unit 140 are respectively connected to the positive electrode and the negative electrode of the power supply 200. A first output end of the voltage conversion unit 140 is connected to the control circuit 123 to convert the power supply voltage of the power supply 200 into a first voltage and deliver the first voltage to the control circuit 123. A second output end of the voltage conversion unit 140 is connected to the relay 122 to convert the power supply voltage of the power supply 200 into a second voltage and deliver the second voltage to the relay 122. By using the voltage conversion unit 140, the power supply voltage can be respectively converted into different voltages to supply power to the control circuit 123 and the relay 122.

In some embodiments, the DC socket 100 may further include a diode 150. An anode of the diode 150 is connected to power supply 200. A cathode of the diode 150 is connected to the first input end of the voltage conversion unit 140. By using the diode 150, the circuit can be kept disconnected in the case where the positive and negative poles of the input of the DC socket 100 are reversely connected, greatly reducing the potential safety hazards.

Various embodiments of the present disclosure have been described above, which are illustrative, not exhaustive, and are not limited to embodiments disclosed. Many modifications and variations will be apparent to those of ordinary skill in the art without departing from the scope and spirit of the illustrated embodiments. The selection of the terms used herein is intended to best explain the principles of the embodiments, practical applications, or technical improvements in the marketplace, or to enable others of ordinary skill in the art to understand embodiments disclosed herein.

## Claims

1. A DC socket (100) comprising:
a first socket contact (101) and a second socket contact (102), wherein the first socket contact (101) is electrically coupled to a positive electrode of a power supply (200), and the second socket contact (102) is electrically coupled to a negative electrode of the power supply (200);
a trigger circuit (110) adapted to generate a first trigger signal upon a plug being inserted to a first predetermined position relative to the first socket contact (101) and the second socket contact (102);
an on-off control unit (120) connected to the trigger circuit (110) and comprising a first line (1) and a second line (2), wherein the first line (1) is connected between the first socket contact (101) and the positive electrode of the power supply (200), and the second line (2) is connected between the first socket contact (101) and the positive electrode of the power supply (200), the first line (1) is provided with a semiconductor switching element (121), the second line (2) is provided with a relay (122), and the on-off control unit (120) is adapted to control the semiconductor switching element (121) to be switched on upon receiving the first trigger signal; and
a voltage detection unit (125) connected between the first line (1) and the on-off control unit (120) to detect a voltage of the first line (1), wherein the on-off control unit (120) is adapted to control the relay (122) to be switched on upon the voltage of the first line (1) being equal to a power supply voltage of the power supply (200).

2. The DC socket (100) of claim 1, wherein the on-off control unit (120) comprises:
a control circuit (123) electrically coupled to the power supply (200), wherein a first input end of the control circuit (123) is connected to the trigger circuit (110), a second input end of the control circuit (123) is connected to an output end of the voltage detection unit (125), a first output end of the control circuit (123) is connected to a control end of the semiconductor switching element (121), a second output end of the control circuit (123) is connected to a control end of the relay (122), the control circuit (123) is adapted to control the semiconductor switching element (121) to be switched on upon receiving the first trigger signal, and the control circuit (123) is adapted to control the relay (122) to be switched on upon the voltage of the first line (1) being equal to the power supply voltage of the power supply (200).

3. The DC socket (100) of claim 2, wherein the control circuit (123) comprises a first delay circuit adapted to control the semiconductor switching element (121) to be switched off after the relay (122) is switched on for a first predetermined time delay.

4. The DC socket (100) of claim 2 or 3, wherein the trigger circuit (110) is adapted to generate a second trigger signal upon the plug being pulled out to a second predetermined position relative to the first socket contact (101) and the second socket contact (102), the control circuit (123) is adapted to control the semiconductor switching element (121) to be switched on and the relay (122) to be switched off upon receiving the second trigger signal.

5. The DC socket (100) of claim 4, wherein the control circuit (123) further comprises a second delay circuit adapted to control the semiconductor switching element (121) to be switched off after the relay (122) is switched off for a second predetermined time delay.

6. The DC socket (100) of any of claims 2-5, wherein the DC socket (100) further comprises a current-limiting resistor (130) connected in series with the semiconductor switching element (121).

7. The DC socket (100) of claim 6, wherein the current-limiting resistor (130) is a negative temperature coefficient thermistor.

8. The DC socket (100) of any of claims 2-7, wherein the DC socket (100) further comprises a voltage conversion unit (140), a first input end and a second input end of the voltage conversion unit (140) are respectively connected to the positive electrode and the negative electrode of the power supply (200), a first output end of the voltage conversion unit (140) is connected to the control circuit (123) to convert the power supply voltage of the power supply (200) into a first voltage and deliver the first voltage to the control circuit (123), and a second output end of the voltage conversion unit (140) is connected to the relay (122) to convert the power supply voltage of the power supply (200) into a second voltage and deliver the second voltage to the relay (122).

9. The DC socket (100) of claim 8, wherein the DC socket (100) further comprises a diode (150), an anode of the diode (150) is connected to the power supply (200), and a cathode of the diode (150) is connected to the first input end of the voltage conversion unit (140).

10. The DC socket (100) of any of claims 1-9, wherein the semiconductor switching element (121) is a MOS transistor.

11. The DC socket (100) of any of claims 1-10, wherein the semiconductor switching element (121) is an insulated gate bipolar transistor.

12. The DC socket (100) of any of claims 1-11, wherein the trigger circuit (110) comprises a contact switch disposed at the first predetermined position inside the DC socket (100).
